Europäisches Patentamt

(19) European Patent Office

Office européen des brevets

(11) Publication number: **0 442 719 A2**

# (12) EUROPEAN PATENT APPLICATION

(21) Application number: **91301159.9**

(22) Date of filing: **13.02.91**

(51) Int. Cl.⁵: **G01V 1/30**

(30) Priority: **13.02.90 US 479778**

(43) Date of publication of application:
**21.08.91 Bulletin 91/34**

(84) Designated Contracting States:
**DE FR GB NL**

(71) Applicant: **Conoco Inc.**
**1000 South Pine Street**
**Ponca City Oklahoma 74603 (US)**

(72) Inventor: **Hanson, Douglas W.**
**1401 Bradbary Lane**
**Ponca City, Oklahoma 74601 (US)**
Inventor: **Parsons, Roger K.**
**303 Briarpark Drive**
**Houston, Texas 77042 (US)**

(74) Representative: **Davies, Christopher Robert et al**
**Frank B. Dehn & Co. Imperial House 15-19**
**Kingsway**
**London WC2B 6UZ (GB)**

(54) Constant offset migration velocity analysis.

(57)   A method for determining accurately the migration velocities for use in seismic migration processing of seismic data. The method presorts the seismic data into common-offset sections (14). The common-offset data is then migrated repeatedly with a selected range of velocities (16-22). The migrated data for each velocity is further sorted into a common-image point profile (24). The correct velocity per depth may then be determined by either determining the least time moveout for the common-image point at each depth (26), or computing the semblance for each common-image point and each test velocity and selecting the largest semblance value.

FIG. 1

# CONSTANT OFFSET MIGRATION VELOCITY ANALYSIS

The present invention relates to seismic migration processing methods that require migration velocities as input parameters, and more particularly to a method for determining these migration velocities.

United States Patent number 4,241,429, titled "Velocity Determination And Stacking Process From Seismic Exploration of Three Dimensional Reflection Geometry" (Bloomquist et al.) relates to processing linear, multiple fold, common depth point sets of seismograms with these dimensional reflection geometry. These seismograms are used to determine the dip and strike of the subsurface reflecting interfaces and the average velocity of the path of the seismic energy to the reflecting interface. The reflections in each set appear with time differences on a hyperbola with trace spacings determined by the source receiver coordinate distance along the lines of exploration. The offset of the apex of this hyperbola is determined from a normal moveout velocity search of the type performed on two dimensional CDP sets. This search identifies the correct stacking velocity and hyperbola offset which are used to determine dip, strike and average velocity.

United States Patent number 4,479,205, titled "Method of Migrating Seismic Data without Dependency on Velocity" (Gray) relates to a method for migration of velocity spectra wherein migration of common depth point gathers is accomplished without prior determination of the velocity/depth field.

United States Patent number 4,503,527, titled "Method for Enhancement of the Signal-To-Noise Ratio an Seismic Reflection Signals" (Pann) related to a method for manipulating seismic reflection signals that are obtained along a line of exploration. These seismic reflection signals are time shifted to correct for moveout caused by horizontal dipping and diffraction subsurface events. These connected signals are stacked with a dip independent velocity parameter to provide a zero source-to-receiver seismic record section enhanced in signal-to-noise ratio.

United States Patent numberr 4,611,312, titled "Method of Seismic Collection Utilizing Multicomponent Receivers" (Ikeda) relates to a method which uses wave tracking rather than a downward continuation concept in processing seismic data. In this manner, two sets of elestic wave fields (one generated by a seismic source, the other recorded by multicomponent geophones) are migrated separately and are then imaged. The process is repeated for common shot gathers, and then the images (associated with each common midpoint gather), are stacked. As a consequence of wave tacking, migration operations are performed in the time domain using finite difference discretization equations involving vector properties of the fields but without having to reduce the latter to one-way wave equations.

United States Patent number 4,745,585, titled "Method of migrating Seismic Data" (Larner) relates to a method wherein seismic data is passed through a preselected number of migration stages. During each stage, data is migrated a plurality of times, where the migration velocity function is a mirror fraction of the velocity required to fully migrate the data in a single stage.

United States Patent number 4,766,574, titled "Method for Depth Imaging Multicomponent Seismic Data" (Whitmore, Jr. et al.) relates to a method for imaging multicomponent seismic data to obtain depth images of the earth's subsurface geological structure as well as estimates of compressional and shear wave interval velocities. Measures are obtained of imparted seismic wavefields incident on reflecting interfaces in the earth's subsurface and of resulting seismic wavefields scattered therefrom. The incident and scattered seismic wavefields are employed to produce time-dependent reflectivity functions representative of the reflecting interfaces. By migrating the time-dependent reflectivity functions, depth images of the reflecting interfaces can be obtained. The migrated reflectivity functions can then be stacked to produce depth images of the earth's subsurface geological structures.

United States Statutory Invention Registration number H482, titled "Seismic Migration Method" (Berryhill et al.) relates to a seismic data processing method in which seismic traces (each trace containing a signal at a location within the earth, and each trace being associated with a least one point in a two-dimensional spatial grid $(x,y)$) are subjected to Fourier transformations, the coefficients of the Fourier-Transformed traces are subjected to a recursive KF migration operation, and the migrated traces are inverse-Fourier-transformed. When displayed, the processed seismic data represents the position within the earth of whatever caused the reflection. The method may be employed to process stacked seismic traces, each associated with both a seismic source location $(x_s,y_s)$ and a different seismic receiver location $(x_r,y_r)$ in the grid. In performing the method, the earth is modeled as a stack of M horizontal layers characterized by a seismic wave velocity. The recursive KF migration step is iterated M -1 times for each trace, where part of the output of each iteration is stored and part discarded.

The present invention provides a method for determining migration velocities in a constant offset migration analysis. The procedure begins by storing the siesmic data into common-offset sections. Test migration velocities are established and changed. The data is migrated using a common-offset migration algorithm commonly used in the art. The migrated data is sorted into common-image point profile for these velocities. In a first embodiment, a semblance (over offset) is computed for each common-image point and each test velocity. At each common-image point and for each depth, the correct velocity is the one corresponding to the largest semblance. In a second embodiment, the data for each common-image point and each test velocity is displayed. At each common-image point and for each depth, the correct velocity is the one corresponding to the least time movement across offsets

There will now described, by way of example only, a description of preferred embodiments of the present invention, with reference to the accompanying drawings, in which :

Figure 1 is a flow chart of a method for determining migration velocities.

Figure 2 is an alternate embodiment of a method for determining migration velocities.

Figures 3-7 illustrate subsurface events as a function of depth for different interval velocities.

The present invention provides a method for determining migration velocities in a constant offset migration analysis. The procedure begins by sorting the seismic data into common-offset sections. Test migration velocities are established and changed. The data is migrated using a common-offset migration algorithm commonly used in the art. The migrated data is sorted into common-image point profile for these velocities. In a first embodiment, a semblance (over offset) is computed for each common-image point and each test velocity. At each common-image point and for each depth, the correct velocity is the one corresponding to the largest semblance. In a second embodiment, the data for each common-image point and each test velocity is displayed. At each common-image point and for each depth, the correct velocity is the one corresponding to the least time movement across offsets

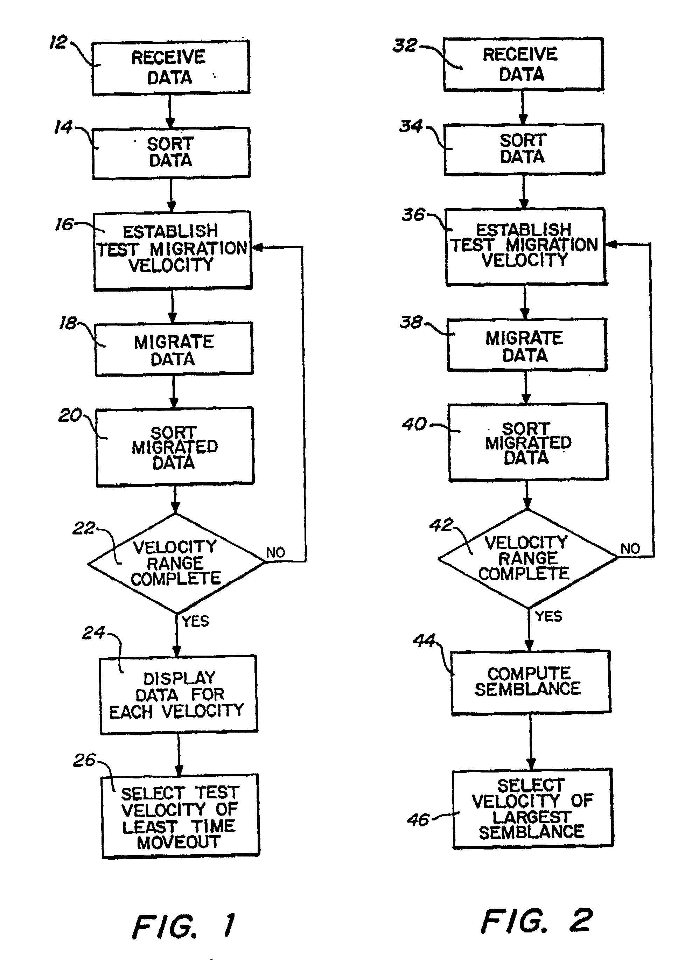

Referring now to Figure 1, a flow chart of a first embodiment of the present invention is illustrated. At block 12 seismic data is received. This data is preferably of the form currently in use in the art. At block 14 the seismic data is sorted into common-offset sections. A test migration velocity is established at block 16. At block 18 the seismic data which has been sorted into common offset sections is migrated using a common offset migration process that is presently used in the art. At block 20 the seismic data which has been migrated is sorted into a common image point profile for each of the test velocities. The velocity range over which the present method is done is checked at block 22. If the entire range has not been completed, the program returns to block 16 where the test migration velocity is changed and the loop comprising blocks 16, 18 and 20 is repeated. If the entire velocity range has been complete, the program proceeds to block 24 where the data for each common image point and each test velocity is displayed. At block 26 the most accurate test velocity is selected. The most accurate or correct test velocity at each common image point and for each depth is the one corresponding to the least time moveout across offsets.

Referring to Figure 2, an alternate embodiment of the present invention is illustrated. The initial part of the program for Figure 2 is identical to that of Figure 1. At block 32 seismic data is received. This data is preferably of the form currently in use in the art. At block 34 the seismic data is sorted into common-offset sections. A test migration velocity is established at block 36. At block 38 the seismic data which has been sorted into common offset sections is migrated using a common offset migration process that is presently used in the art. At block 40 the seismic data which has been migrated is sorted into a common image point profile for each of the test velocities. The velocity range over which the present method is done is checked at block 42. If the entire range has not been completed, the program returns to block 36 where the test migration velocity is changed and the loop comprising blocks 36, 38 and 40 is repeated. If the entire velocity range has been complete, the program proceeds to block 44 where the semblance over the offset for each common image point and each test velocity is computed. The semblance S at a time sample k of a set of m traces is defined by :

$$S(k) = \frac{\displaystyle\sum_{j=k-n/2}^{k+n/2} \left[ \sum_{i=1}^{m} F_{ij} \right]^{2}}{\displaystyle\frac{1}{m} \sum_{j=k-n/2}^{k+n/2} \left[ \sum_{i=1}^{m} (F_{ij})^{2} \right]}$$

where n is the length of a time window centered at k and $F_{ij}$ is the jth time sample of trace i.

At block 46 the most accurate test velocity is selected. In this embodiment the most accurate or correct velocity at each common image point and for each depth is the one corresponding to the largest semblance.

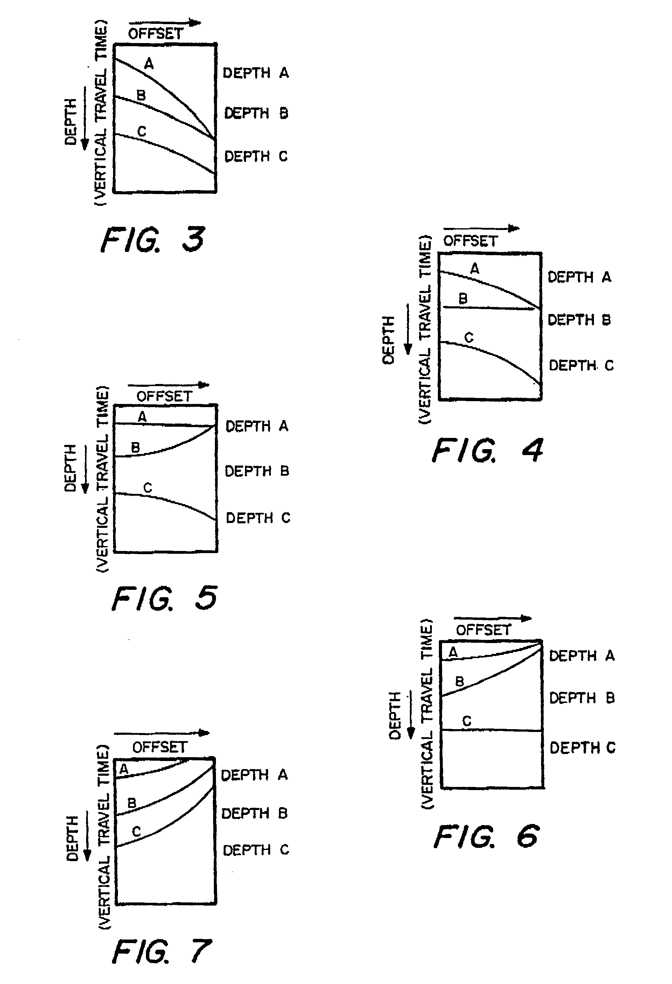

Figures 3-7 illustrate the output for the method of the present invention at one common image point and for five test migration velocities (TMV)

The optimal velocity for a particular depth is the one that minimizes the depth moveout with offset for the event at that depth (i.e., flattens the event). Figure 3 illustrates incorrect velocities for all three depths, depth A, depth B and depth C. Figure 4 illustrates the correct migration velocity for Depth B, while Figure 5 illustrates the correct migration velocity for Depth A. Figure 6 illustrates the correct migration velocity for Depth C.

The flatness of an event is a more restrictive criterion than the conventional sharpness-of-stack criterion and hence yields more accurate velocity estimates. Common shot imaging methods, in general, have a much smaller aperture than the constant offset imaging method. Consequently, these common shot methods produce more undesirable artifacts and do not produce as good an image of dipping reflectors.

The present invention has been described by way of a preferred embodiment, however, it is to be understood as not limited thereto, but only by the scope of the following claims as interpreted by the description.

## Claims

1. A method for determining a migration velocity corresponding to the velocity of seismic signals in a subsurface medium for use in a constant offset migration analysis comprising the steps of :
   providing a seismic signal ;
   receiving reflected seismic signals from reflecting subsurface interfaces ;
   obtaining seismic data corresponding to the reflected seismic signals ;
   sorting the seismic data into common-offset sections ;
   establishing test migration velocities ;
   changing said test migration velocities ;
   migrating said seismic data using a common-offset migration process ;
   sorting said migrated data into a common-image point profile for each test migration velocity ;
   identifying from the migrated data an optimum migration velocity for each common-image point.

2. A method for determining migration velocities in a constant offset migration analysis comprising the steps of :
   receiving seismic data having a test velocity ;
   sorting the seismic data into common-offset sections ;
   establishing test migration velocities ;
   changing said test migration velocities ;
   migrating said seismic data using a common-offset migration process ;
   sorting said migrated data into common-image point profile for each test migration velocity ;
   computing a semblance over offset for each common-image point and each test velocity ; and
   selecting a velocity corresponding to the largest semblance.

3. The method according to claim 1 wherein said computing step includes the step of :
   calculating the semblance S at a time sample k of a set of m traces according to the formula :

$$S(k) = \frac{\sum_{j=k-n/2}^{k+n/2} \left[ \sum_{i=1}^{m} F_{ij} \right]^2}{\frac{1}{m} \sum_{j=k-n/2}^{k+n/2} \left[ \sum_{i=1}^{m} (F_{ij})^2 \right]}$$

where n is the length of a time window centered at k anf $F_{ij}$ is the jth time sample of trace i.

4. A method for determining migration velocities in a constant offset migration analysis comprising the steps of :
   receiving seismic data having a test velocity ;
   sorting the seismic data into common-offset sections ;
   establishing test migration velocities ;
   changing said test migration velocities ;
   migrating said seismic data using a common-offset migration process ;
   sorting said migrated data into common-image point profile for each test migration velocity ;

displaying the data for each common-image point and each test velocity ; and
selecting a velocity corresponding to the least time movement across offsets.

5. A method for determining migration velocities for use in seismic migration processing of seismic data comprising the steps of :
presorting the seismic data into common-offset sections ;
migrating said common-offset data repeatedly with a selected range of velocities ;
sorting said migrated data each velocity into a common-image profile ;
determining a velocity per depth by determining the least time moveout for the common-image point at each depth.

6. A method for determining migration velocities for use in seismic migration processing of seismic data comprising the steps of :
presorting the seismic data into common-offset sections ;
migrating said common-offset data repeatedly with a selected range of velocities ;
sorting said migrated data for each velocity into a common-image point profile ;
determining a velocity per depth by computing the semblance for each common-image point and each test velocity ; and
selecting the velocity corresponding to the largest semblance value.

7. The method according to claim 4 wherein said determining step includes the step of :
calculating the semblance S at a time sample k of a set of m traces acording to the formula :

$$S(k) = \frac{\sum\limits_{j=k-n/2}^{k+n/2} \left[ \sum\limits_{i=1}^{m} F_{ij} \right]^2}{\frac{1}{m} \sum\limits_{j=k-n/2}^{k+n/2} \left[ \sum\limits_{i=1}^{m} (F_{ij})^2 \right]}$$

where n is the length of a time window centered at k and $F_{ij}$ is the jth time sample trace i.

FIG. 1

FIG. 2

FIG. 3

FIG. 4

FIG. 5

FIG. 6

FIG. 7